# EUROPÄISCHE PATENTANMELDUNG

(11) **EP 2 581 258 A1**
(43) Veröffentlichungstag der Anmeldung: **17.04.2013**
(21) Anmeldenummer: 11184979.0
(22) Anmeldetag: 13.10.2011
(51) Int. Cl.: B60L 15/20, B60L 3/10

(54) **Kraftwagen mit wenigstens einem elektrischen Antriebsmotor und Verfahren zum Betreiben einer Steuereinrichtung eines Kraftwagens**

(71) Anmelder: Siemens Aktiengesellschaft, 80333 München (DE)
(72) Erfinder: Bittner, Roland, 91522 Ansbach (DE); Hösle, Markus, 91058 Erlangen (DE)

(57) **Zusammenfassung**

Um bei einem Kraftwagen (10) eine Fahrsituation automatisch einschätzen zu können, müssen in der Regel zahlreiche Sensoren, wie etwa Raddrehzahlsensoren, bereitgestellt sein. Hierdurch ergeben sich entsprechende Herstellungskosten für den Kraftwagen. Erfindungsgemäß wird in Abhängigkeit von wenigstens einem Wert für wenigstens eine Betriebsgröße wenigstens eines elektrischen Antriebsmotors (20 bis 26) wenigstens ein Betriebsmittel des Kraftwagens angesteuert und hierdurch eine Fahrsituation des Kraftwagens (10) verändert. Die aktuelle Fahrsituation wird also unmittelbar auf der Grundlage der Betriebsgröße eines elektrischen Antriebsmotors (20 bis 26) ermittelt und nicht etwa indirekt über Sensoren. Gemäß einem zweiten Aspekt der Erfindung ist vorgesehen, in Abhängigkeit von einem erfassten Sensorsignal wenigstens ein erstes Rad (12 bis 18) mit einem ersten Drehmoment und wenigstens ein zweites Rad (12 bis 18) mit einem anderen zweiten Drehmoment zu beaufschlagen. Hierdurch wird achsabhängig oder sogar einzelradabhängig jeweils dasjenige Drehmoment erzeugt, das sich als das günstigste zum Verbessern der Fahrstabilität des Kraftwagens (10) erweist.

## Beschreibung

Die Erfindung betrifft einen Kraftwagen mit wenigstens einem elektrischen Antriebsmotor sowie mit einer Steuereinrichtung, welche mit dem wenigstens einen Antriebsmotor zum Austauschen von Signalen gekoppelt ist. Die Erfindung betrifft auch zwei Verfahren zum Betreiben der Steuereinrichtung.

Bei einem Kraftwagen kann vorgesehen sein, während unterschiedlicher Fahrmanöver eines Fahrers die Fahrstabilität des Kraftwagens dadurch zu verbessern, dass fahrerunabhängig ein Betriebsmittel des Kraftwagens angesteuert wird, welches dann aktiv auf die Fahrsituation einwirkt. Im Zusammenhang mit Bremsmanövern kann hierzu beispielsweise ein Antiblockiersystem (ABS) bereitgestellt sein. Ein ABS regelt dabei beim Bremsen des Kraftwagens den Bremsdruck eines Rades entsprechend der Haftfähigkeit des Rades auf der Fahrbahn so ein, dass ein Blockieren des Rades verhindert wird. Im Zusammenhang mit einem Beschleunigungsmanöver kann die Fahrstabilität durch ein elektronisches Stabilitätsprogramm (ESP) verbessert werden. Hierbei wird durch gezieltes Abbremsen einzelner Räder erreicht, dass man eine Quer- und Längsstabilisierung des Kraftwagens erhält. So wird ein Drehen des Fahrzeugs um seine Hochachse (Gieren) verhindert. Durch ein ESP kann auch bei einer Kurvenfahrt oder bei einem Ausweichmanöver eine untersteuernde oder übersteuernde Tendenz des Kraftwagens ausgeglichen werden.

Die bekannten Verfahren zum aktiven Einwirken auf eine Fahrsituation nutzen in der Regel das hydraulische Bremssystem des Kraftwagens. Dieses hat die nötige geringe Reaktionszeit. Zudem kann auch innerhalb von sehr kurzer Zeit eine sehr große Bremsleistung bereitgestellt werden, so dass in einem Notfall durch ein automatisches Steuersystem auch besonders drastisch in die Fahrsituation eingegriffen werden kann. Nachteilig bei solchen Systemen ist allerdings, dass mit ihnen nur dann die Fahrstabilität verbessert werden kann, wenn die Haftung der Räder des Kraftwagens auf der Fahrbahn ausreichend groß ist.

Um die Fahrsituation richtig einschätzen zu können, müssen bei den Systemen zur automatischen Stabilisierung des Fahrverhaltens eines Kraftwagens zahlreiche Sensoren in dem Kraftwagen vorgesehen sein, wie beispielsweise ein Querbeschleunigungssensor, ein Raddrehzahlsensor und ein Gierratensensor. Hierdurch ergeben sich entsprechend hohe Herstellungskosten bei der Fertigung eines Kraftwagens.

Im Zusammenhang mit elektrisch betriebenen Fahrzeugen ist bekannt, bei diesen anstelle eines einzelnen zentralen Antriebsmotors, wie dies bei einem Kraftwagen mit einem Verbrennungsmotor der Fall ist, eine Mehrzahl von Elektromotoren bereitzustellen, die einen Einzelachs- oder sogar einen Einzelradantrieb ermöglichen.

Ein solches Fahrzeug ist beispielsweise aus dem Dokument EP 1 752 332 A2 bekannt. Bei dem darin beschriebenen Elektrofahrzeug werden die elektrischen Maschinen der Antriebsmotoren während eines Abbremsens des Fahrzeugs zum Rekuperieren der kinetischen Energie des Fahrzeugs genutzt.

Es ist Aufgabe der vorliegenden Erfindung, kostengünstig zu realisierende Möglichkeiten einer Verbesserung der Fahrstabilität eines Kraftwagens bereitzustellen.

Die Aufgabe wird durch ein Verfahren gemäß Patentanspruch 1, ein Verfahren gemäß Patentanspruch 7 sowie durch einen Kraftwagen gemäß Patentanspruch 17 gelöst. Vorteilhafte Weiterbildungen der erfindungsgemäßen Verfahren sind durch die Unteransprüche gegeben.

Mittels des ersten erfindungsgemäßen Verfahrens wird eine Steuereinrichtung eines Kraftwagens betrieben, welcher wenigstens einen elektrischen Antriebsmotor aufweist. Der Kraftwagen kann also entweder einen einzelnen, zentralen Antriebsmotor oder aber auch mehrere Einzelachsantriebe oder sogar Einzelradantriebe aufweisen. In einem ersten Schritt des Verfahrens wird wenigstens ein Wert für wenigstens eine Betriebsgröße dieses wenigstens einen Antriebsmotors erfasst. In Abhängigkeit von dem wenigstens einen erfassten Wert wird dann in einem zweiten Schritt wenigstens ein Betriebsmittel des Kraftwagens angesteuert und hierdurch eine Fahrsituation des Kraftwagens verändert.

Dieses erfindungsgemäße Verfahren weist den Vorteil auf, dass eine aktuelle Fahrsituation, wie zum Beispiel das Durchdrehen eines Reifens, unmittelbar auf der Grundlage der Betriebsgröße eines Antriebsmotors ermittelt wird und nicht etwa indirekt über zusätzliche Sensoren. Dem erfindungsgemäßen Verfahren liegt dabei die Erkenntnis zu Grunde, dass bei einem elektrischen Antriebsmotor eine Wechselwirkung zwischen einem von dem Antriebsmotor angetriebenen Rad und einer Fahrbahn, über welche das Rad rollt, unmittelbar in Betriebsgrößen des Antriebsmotors widergespiegelt ist. Rollt der Kraftwagen beispielsweise über einen unbefestigten, holprigen Weg, so wirkt auf das Rad eine Kraft mit einem unregelmäßigen zeitlichen Verlauf des Betrages der Kraft. In einer Antriebsregelung eines elektrischen Antriebsmotors wird sich dieser unregelmäßige zeitliche Verlauf in dem zeitlichen Verlauf der Stellgrößen dieser Regelung widerspiegeln. Somit kann aus dieser Stellgröße ohne einen zusätzlichen Sensor auf die Beschaffenheit des Untergrundes rückgeschlossen werden, über welchen das Rad gerade rollt. Antriebsregelungen für elektrische Antriebsmotoren weisen zudem Reaktionszeiten von weniger als 10 ms, in manchen Fällen sogar weniger als 1 ms auf, so dass die Information über die Beschaffenheit des Untergrundes auch innerhalb dieser kurzen Zeit zur Verfügung steht.

Als Betriebsgröße des wenigstens einen Antriebsmotors, deren Auswertung einen zuverlässigen Rückschluss auf eine tatsächliche, momentane Fahrsituation erlaubt, haben sich insbesondere bewährt: ein Motorstrom des wenigstens einen elektrischen Antriebsmotors, eine Leistungsaufnahme eines Antriebsmotors, eine Drehzahl wenigstens eines Rotors, eine Pulsfrequenz wenigstens eines Wechselrichters eines Antriebsmotors. Im Zusammenhang mit Regeleinrichtungen, die Bestandteil eines elektrischen Antriebsmotors sein können, hat es sich zudem bewährt, eine q-Komponente eines Statorstromes, eine d-Komponente des Statorstromes, eine Schlupffrequenz zwischen einem Stator- und einem Rotordrehfeld und allgemein eine Stellgröße, eine Regelgröße und/oder eine Regelabweichung der Regeleinrichtung zu beobachten. Ein Beispiel für eine solche zum Beobachten der Fahrsituation geeignete Regeleinrichtung ist eine Vektorregelung.

Auf der Grundlage der erfassten Werte für die Betriebsgrößen, das heißt beispielsweise aus den Beträgen der erfassen Werte oder aus deren zeitlichen Verlauf, kann bereits eine Fülle von Informationen über eine aktuelle Fahrsituation ermittelt werden. Entsprechend sieht eine Ausführungsform des erfindungsgemäßen Verfahrens etwa vor, dass in Abhängigkeit von dem wenigstens einen erfassten Wert eine Beschaffenheit eines Fahrbahnabschnitts ermittelt wird, der sich gerade unter wenigstens einem Rad des Kraftwagens befindet. Wie bereits beschrieben kann anhand der Betriebsgröße auf einen Abrollwiderstand des Rades oder auf eine Ebenheit des Untergrundes rückgeschlossen werden. Eine weitere Ausführungsform des Verfahrens sieht vor, anhand der erfassten Werte einen Grad einer Haftung des Rads auf dem Fahrbahnabschnitt zu ermitteln. Beispielsweise ist es möglich, einen sandigen Untergrund auf Grundlage eines zeitlichen Verlaufs des Motorstroms zu erkennen, wenn das Rad bei einem bekannten, auf das Rad wirkenden Antriebsmoments auf dem Untergrund sporadisch durchdreht. Durch das Vergleichen der Werte der Betriebsgrößen für Antriebsmotoren, die auf unterschiedliche Räder wirken, wird gemäß einer anderen Ausführungsform des erfindungsgemäßen Verfahrens auch auf eine Giergeschwindigkeit des Kraftwagens und/oder ein Wanken des Kraftwagens und/oder ein Nicken des Kraftwagens rückgeschlossen.

Um durch Ansteuern des wenigstens einen Betriebsmittels des Kraftwagens auch komplexere Abfolgen von Eingriffsschritten besser planen zu können, hat es sich als vorteilhaft erwiesen, entsprechende Fahrsituationen, die einen solchen komplexeren Eingriff in eine aktuelle Fahrsituation nötig machen, im Voraus zu beschreiben. Anschließend kann dann einfacher durch Vergleichen erfassten Werte mit in den einzelnen Fahrsituationen zu erwartenden Werten ermittelt werden, welche der Fahrsituationen nun tatsächlich vorliegt. Entsprechend sieht eine Ausführungsform des erfindungsgemäßen Verfahrens vor, in Abhängigkeit von dem wenigstens einem erfassten Wert aus einer Mehrzahl von vorgegebenen möglichen Fahrsituationen eine als aktuelle Fahrsituation auszuwählen, die durch das Ansteuern des wenigstens einen Betriebsmittel zu ändern ist. Auf Grundlage dieser Vorgehensweise ist es beispielsweise möglich, wenigstens eine aus den folgenden möglichen Fahrsituationen zu erkennen und dann durch entsprechendes Ansteuern des wenigstens einen Betriebsmittels die Fahrstabilität des Kraftwagens wieder herzustellen. Es ist erkennbar, ob wenigstens ein Reifen des Kraftwagens auf einen unbefestigten Seitenstreifen einer Straße gelangt ist. Auch das Ausbrechen eines Bug- oder Heckteils des Kraftwagens wird erkannt. Auch das Durchdrehen eines Reifens, also der Verlust eines Kraftschlusses wenigstens eines Reifens mit der Fahrbahnoberfläche, insbesondere aufgrund von Aquaplaning, lässt sich erkennen.

Welche Betriebsmittel des Kraftwagens zum Verändern der Fahrsituation angesteuert werden, hängt selbstverständlich von der aktuellen Fahrsituation ab, die es zu verändern gilt. Als effektiv haben sich die folgenden Betriebsmittel erwiesen: ein ESP, ein ABS, ein Lenkassistent, durch welchen fahrerunabhängig ein Lenkmanöver eingeleitet wird, und ein Bremssystem, durch welches fahrerunabhängig eine Notbremsung eingeleitet wird. Es kann aber auch vorgesehen werden, einen Signalgeber bereitzustellen, durch welchen dann an einen Fahrer des Kraftwagens ein akustisches und/oder optisches und/oder haptisches Warnsignal abgegeben wird. Hierdurch lässt sich die Fahrsituation dann insoweit ändern, als dass ein Fahrer auf eine aktuelle gefährliche Fahrsituation zumindest aufmerksam gemacht wird. Das Ansteuern des Betriebsmittels erfolgt allgemein bevorzugt durch Vorgeben eines Soll-Werts für eine durch das jeweilige Betriebsmittel einstellbare Größe. Eine besonders bevorzugte Ausführungsform sieht vor, eine Reglereinrichtung wenigstens eines der Antriebsmotoren selbst anzusteuern, und somit beispielsweise durch Beschleunigen eines Rades oder durch Abbremsen desselben auf die Fahrsituation einzuwirken.

Eine Ausführungsform des erfindungsgemäßen Verfahrens ermöglicht es, einen rekuperativen Betrieb des Kraftwagens auch während eines Bremsmanövers zu ermöglichen, ohne dass deshalb die Fahrstabilität des Kraftwagens beeinträchtigt wird. Gemäß dieser Ausführungsform wird dabei während eines Abbremsens des Kraftwagens eine elektrische Maschine wenigstens eines Antriebsmotors als Generator betrieben und hierdurch wenigstens ein Rad des Kraftwagens mit einem Bremsmoment beaufschlagt. In Abhängigkeit von dem wenigstens einen Wert für die Betriebsgröße des im Bremsbetrieb betriebenen Antriebsmotors wird währenddessen ein Schlupf des Rades bezüglich der Fahrbahn ermittelt und der Schlupf auf einen Soll-Schlupfwert eingeregelt. Dazu wird das Bremsmoment in Abhängigkeit von dem ermittelten Schlupf eingestellt. Indem der Schlupf nicht beispielsweise durch ein hydraulisches Bremssystem, sondern durch Einregeln der als Generator betriebenen elektrischen Maschine eingestellt wird, lässt sich der Schlupf zum einen sehr genau und zum anderen mit sehr geringen Zeitkonstanten, insbesondere mit Zeitkonstanten kleiner als 15 ms, einregeln. Bei hydraulischen Bremsen kann eine Regelung dagegen oftmals nur mit Zeitkonstanten im Bereich von 100 ms realisiert werden. Als besonders günstiger Soll-Schlupfwert hat sich bei dem erfindungsgemäßen Verfahren ein Soll-Schlupfwert im Bereich zwischen 10% und 20% erwiesen.

Ein zweiter Aspekt der Erfindung betrifft ein Verfahren zum Betreiben einer Steuereinrichtung eines Kraftwagens, welcher keinen zentralen, einzelnen Antriebsmotor, sondern eine Mehrzahl von elektrischen Antriebsmotoren aufweist. Mittels einer solchen Mehrzahl von elektrischen Antriebsmotoren wird ein Einzelradantrieb und/oder ein Einzelachsantrieb bereitgestellt, wobei hierzu wenigstens ein erstes Rad des Kraftwagens mit einem ersten Antriebsmotor und wenigstens ein zweites Rad des Kraftwagens mit einem zweiten Antriebsmotor mit einem Drehmoment beaufschlagt werden. Gemäß dem Verfahren wird des Weiteren ein Signal wenigstens eines Sensors des Kraftwagens erfasst und hieraus ermittelt, ob eine kritische Fahrsituation vorliegt.

Bei Vorliegen einer solchen kritischen Fahrsituation macht sich das Verfahren nun zunutze, dass auf die mittels des wenigstens einen Sensors erkannte Fahrsituation sehr viel flexibler reagiert werden kann, wenn die Räder des Kraftwagens mittels der Mehrzahl von elektrischen Antriebsmotoren einzeln angesteuert werden. Hierzu ist gemäß dem zweiten erfindungsgemäßen Verfahren vorgesehen, in Abhängigkeit von dem erfassten Signal das wenigstens eine erste Rad mittels des ersten Antriebsmotors mit einem ersten Drehmoment zu beaufschlagen und das wenigstens eine zweite Rad mittels des zweiten Antriebsmotors mit einem von dem ersten Drehmoment verschiedenen, zweiten Drehmoment zu beaufschlagen. Hierdurch ergibt sich der Vorteil, dass achsabhängig oder sogar einzelradabhängig dasjenige Drehmoment erzeugt werden kann, das sich voraussichtlich als das günstigste erweist, um die Fahrstabilität des Kraftwagens zu erhalten oder zu verbessern.

Eine Ausführungsform des zweiten erfindungsgemäßen Verfahrens sieht sogar vor, das wenigstens eine erste Rad mit einem Antriebsmoment zu beaufschlagen und gleichzeitig das wenigstens eine zweite Rad mit einem Bremsmoment zu beaufschlagen. Mit einem Antriebsmoment ist dabei ein Drehmoment gemeint, das in die Rollrichtung des Rades wirkt, während ein Bremsmoment ein Drehmoment ist, das entgegen der Rollrichtung des Rades wirkt. Diese Ausführungsform des zweiten erfindungsgemäßen Verfahrens ermöglicht es in vorteilhafter Weise, z.B. während einer Kurvenfahrt auch die Gierrate oder Giergeschwindigkeit des Fahrzeugs zu kontrollieren. Genauso ist es möglich, während eines Bremsmanövers ein blockiertes Rad wieder zu beschleunigen, um seine Umfangsgeschwindigkeit wieder zu erhöhen und so die Haftung des Rades mit der Fahrbahn wiederherzustellen. Währenddessen können die übrigen Räder des Kraftwagens weiter mit einem Bremsmoment beaufschlagt werden, um das Fahrzeug weiter abzubremsen.

Eine weitere Ausführungsform des zweiten erfindungsgemäßen Verfahrens sieht vor, auf der Grundlage des wenigstens einen Sensorsignals eine Kurvenfahrt des Kraftwagens zu erkennen und ein Fahrverhalten des Kraftwagens durch Einstellen einer Giergeschwindigkeit zu steuern. Mit einem Fahrverhalten ist hierbei insbesondere ein Einlenkverhalten des Kraftwagens gemeint, also dessen Tendenz, während der Kurvenfahrt zu untersteuern oder zu übersteuern. Bevorzugt wird das Fahrverhalten gemäß dieser Ausführungsform dabei neutralisiert, sodass der Kraftwagen während der Kurvenfahrt gleichmäßig über alle Räder schiebt bzw. driftet. Zum Einstellen der Giergeschwindigkeit wird das wenigstens eine erste Rad mit einem ersten, insbesondere größeren, Antriebsmoment beaufschlagt als die übrigen Räder. Zusätzlich oder alternativ dazu kann das wenigstens eine zweite Rad mit einem anderen, insbesondere größeren, Bremsmoment beaufschlagt werden als die übrigen Räder. Anders als bei einem herkömmlichen ESP wird also nicht durch Abbremsen einzelner Räder mittels einer hydraulischen Bremse auf die Giergeschwindigkeit Einfluss genommen. Stattdessen wird direkt das auf die einzelnen Räder wirkende Drehmoment mittels der elektrischen Antriebsmotoren selbst eingestellt. Insbesondere ist es deshalb möglich, ein Rad während der Kurvenfahrt unabhängig von den anderen Rädern mit einem größeren Antriebsmoment zu beaufschlagen. Dies hat sich im Vergleich zu den herkömmlichen Stabilisierungsmaßnahmen als besonders vorteilhaft erwiesen. Mit einem hydraulischen Bremssystem ist diese Maßnahme überhaupt nicht möglich.

Im Zusammenhang mit einer Kurvenfahrt sieht eine weitere Ausführungsform des zweiten erfindungsgemäßen Verfahrens vor, wenigstens einen Wert für eine Fahrgeschwindigkeit und/oder für einen Radius einer Fahrtrajektorie des Kraftwagens zu erfassen. Gemäß dieser Ausführungsform wird ebenfalls das Fahrverhalten des Kraftwagens eingestellt. Dazu wird eine insgesamt zu erzeugende Antriebs- oder Bremsleistung, wie sie beispielsweise der Fahrer mittels eines Gas- oder Bremspedals vorgeben kann, auf die Räder des Kraftwagens in Abhängigkeit von dem erfassten wenigstens einen Wert für die Fahrgeschwindigkeit und/oder den Fahrradius aufgeteilt. Diese Ausführungsform nutzt also in vorteilhafter Weise die Möglichkeit, dass bei einer Mehrzahl von Antriebsmotoren diese unabhängig voneinander angesteuert werden können.

Eine weitere Ausführungsform des zweiten erfindungsgemäßen Verfahrens sieht vor, auf der Grundlage des Sensorsignals eine Falschbeladung des Kraftwagens zu erkennen. Eine solche liegt beispielsweise vor, wenn schwere Gegenstände in einem Kofferraum des Kraftwagens lediglich auf einer Seite gelagert sind und hierdurch die Gewichtskraft dieser Gegenstände ungleichmäßig auf die beiden Räder einer Achse des Kraftwagens verteilt ist. Da sich der Wagen dabei auch entsprechend neigt, kann es vorkommen, dass das weniger belastete Rad während eines Beschleunigens des Kraftwagens schon bei einem geringen Antriebsmoment durchdreht. Gleichzeitig haftet dafür das gegenüberliegende Rad umso besser an der Fahrbahnoberfläche.

Gemäß der angesprochenen weiteren Ausführungsform des zweiten Verfahrens wird die Asymmetrie der Gewichtsverteilung in dem Kraftwagen ermittelt und das Fahrverhalten des Kraftwagens dadurch eingestellt, dass eine insgesamt zu erzeugende Antriebs- oder Bremsleistung auf die Räder des Kraftwagens in Abhängigkeit von dieser ermittelten Asymmetrie aufgeteilt wird. Hiermit ergibt sich der Vorteil, dass das stark auf die Fahrbahn angepresste Rad mit entsprechend mehr Drehmoment beaufschlagt werden kann, während gleichzeitig das weniger belastete Rad der Achse mit weniger Drehmoment beaufschlagt wird. Hierdurch kann sich sogar ein verbessertes Beschleunigungsverhalten des Kraftwagens ergeben.

Zum Versorgen der elektrischen Antriebsmotoren mit elektrischer Energie kann bei einem Kraftwagen vorgesehen sein, die Energie in einem elektrischen Energiespeicher, beispielsweise einem Akkumulator, zu speichern und so in dem Kraftwagen mitzuführen. Die Reichweite eines elektrisch betriebenen Kraftwagens ist dabei in der Regel kleiner als diejenige eines Kraftwagens mit einem Verbrennungsmotor. Für den Fall, dass ein elektrisch angetriebener Kraftwagen aufgrund eines leeren Energiespeichers liegen bleibt, ist es zudem nur schwer möglich, Energie über einen weiteren Akku zu beschaffen und hiermit den Kraftwagen wieder fahrbereit zu machen. Hier ist es in der Regel nötig, den Kraftwagen abzuschleppen. Hierzu sieht eine Ausführungsform des zweiten erfindungsgemäßen Verfahrens vor, auf der Grundlage des Sensorsignals eine Abschleppfahrt zu erkennen, bei welcher der Kraftwagen abgeschleppt wird. Ein solches Signal kann im einfachsten Fall von einer Bedieneinrichtung erzeugt werden, über welche der Fahrer einen Abschleppmodus des Kraftwagens aktiviert. Gemäß der Ausführungsform des Verfahrens wird wenigstens eine elektrische Maschine wenigstens eines der Antriebsmotoren während der Abschleppfahrt als Generator betrieben und hierdurch ein elektrischer Energiespeicher des Kraftwagens wieder mit elektrischer Energie aufgeladen. Dies ermöglicht es in vorteilhafter Weise, den Kraftwagen durch das Abschleppen wieder fahrtüchtig zu machen und ihn dann unter Eigenantrieb bis zur nächsten Ladestation zu fahren.

Um auch bei einem Ausfall eines Stromrichters eines der Antriebsmotoren dennoch zu ermöglichen, dass der Kraftwagen sicher abgebremst werden kann, wird gemäß einer anderen Ausführungsform des erfindungsgemäßen Verfahrens auf der Grundlage des Signals ein Ausfall eines Stromrichters erkannt und ggf. der durch diesen Stromrichter zu steuernde Antriebsmotor mittels eines Bremswiderstands abgebremst. Hierdurch ergibt sich der Vorteil, dass der Antriebsmotor nicht einfach im Leerlauf weiterläuft, sondern dazu genutzt wird, den Kraftwagen sicher abzubremsen.

Das Beaufschlagen der Räder des Kraftwagens mit unterschiedlichen Drehmomenten erfolgt, wie beschrieben, in Abhängigkeit des wenigstens einen Sensorsignals. Hierdurch wird somit eine Zustandsgröße des Kraftwagens bei der Ermittlung von geeigneten Werten für die Drehmomente berücksichtigt. Insbesondere wird wenigstens eine der folgenden Zustandsgrößen des Kraftwagens bei dieser Ausführungsform des Verfahrens berücksichtigt: Federeinstellungen des Kraftwagens, Dämpfereinstellungen des Kraftwagens, ein gemessener Luftdruck wenigstens eines Reifens des Kraftwagens, eine Gewichtsverteilung einer Beladung in dem Kraftwagen, Sitzpositionen von in dem Kraftwagen befindlichen Personen, eine durch Gewichtsensoren des Kraftwagens angezeigte Gewichtskraft, welche auf eine Achse und/oder ein Einzelrad wirkt. Diese Zustandsgrößen haben ebenfalls einen signifikanten Einfluss auf die Fahrdynamik eines Kraftwagens. Durch ihre Berücksichtigung beim Ermitteln des ersten und des zweiten Drehmoments ergibt sich der Vorteil, dass die Fahrdynamik genauer ermittelt werden kann und somit eine verbesserte Kontrolle über das Fahrverhalten und die Fahrstabilität des Kraftwagens gegeben ist.

Da die hier gemäß den unterschiedlichen Ausführungsformen der beiden erfindungsgemäßen Verfahren durchgeführten Maßnahmen zur Verbesserung der Fahrstabilität eines elektrisch angetriebenen Kraftwagens durch ein entsprechendes Steuergerät selbsttätig, das heißt ohne einen steuernden Eingriff eines Fahrers durchgeführt werden, ergibt sich das Risiko, dass ein Fahrer die tatsächliche Fahrsituation verkennt und sein Fahrverhalten deshalb nicht anpasst. Kommt es beispielsweise wiederholt zu Aquaplaning, ohne dass dies der Fahrer aufgrund der stabilisierenden Maßnahmen der beiden Verfahren spürt, könnte der Fahrer dazu verleitet sein, weiterhin mit zu hoher Geschwindigkeit auf einer regennassen Fahrbahn zu fahren. Hierzu sieht eine Ausführungsform sowohl des ersten als auch des zweiten erfindungsgemäßen Verfahrens vor, zusätzlich in Abhängigkeit von einem mittels wenigstens einem der Antriebsmotoren erzeugten Drehmoment ein akustisches und/oder optisches und/oder haptisches Warnsignal an einen Fahrer des Kraftwagens abzugeben. Insbesondere wird das Warnsignal dann abgegeben, wenn mittels wenigstens eines der Antriebsmotoren ein Bremsmoment erzeugt wird, dessen Betrag größer als ein vorbestimmter Schwellenwert ist. Hierdurch wird der Fahrer dann auf die automatisch eingeleiteten stabilisierenden Maßnahmen aufmerksam gemacht, so dass zu erwarten ist, dass er das Fahrzeug nicht noch einmal in die unerwünschte Fahrsituation bringt.

Die beiden erfindungsgemäßen Verfahren sind nicht darauf begrenzt, die Fahrsituation ausschließlich aus einer Betriebsgröße eines der Antriebsmotoren oder auf der Grundlage eines Sensorsignals zu ermitteln. Es können auch weitere Daten aus anderen Quellen genutzt werden. So sieht eine Ausführungsform des ersten erfindungsgemäßen Verfahrens und eine des zweiten erfindungsgemäßen Verfahrens jeweils vor, Daten zu einem Fahrbahnzustand und/oder zu einer Beschaffenheit eines Fahrbahnabschnitts, über welchen wenigstens ein Rad des Kraftwagens rollt, und/oder zu einer Beschaffenheit eines Fahrbahnbelags einer vor dem Fahrzeug befindlichen Fahrbahn zu erfassen und auszuwerten und hierbei als Daten insbesondere Positionsdaten des Kraftwagens und/oder Wetterdaten über eine entsprechende Empfangseinrichtung (GPS, Rundfunk, Internet) zu empfangen und/oder aus einer Navigationsdatenbank auszulesen. Die Wetterdaten betreffen hierbei insbesondere eine Umgebungstemperatur des Kraftwagens oder eine Information darüber, ob es in der Umgebung regnet. Um festzustellen ob und wie stark er regnet, kann auch ein Signal eines Regensensors des Kraftwagens ausgewertet werden. Auf der Grundlage von Informationen über einen Fahrbahnzustand, ob also die Fahrbahn beispielsweise nass oder trocken ist, und/oder über die Beschaffenheit der Fahrbahn (Bitumen, Kopfsteinpflaster, Sandweg) ermöglichen es, Höchstwerte für ein Bremsmoment oder für einen Lenkwinkel zu ermitteln und diese beim Ansteuern eines Betriebsmittels zu berücksichtigen, um die Fahrsituation kontrolliert zu beeinflussen.

Zu der Erfindung gehören auch Verfahren, die sich jeweils aus einer Kombination einer Ausführungsform des ersten erfindungsgemäßen Verfahrens und einer Ausführungsform des zweiten erfindungsgemäßen Verfahrens ergeben. Diese Verfahren sind hier nicht noch einmal gesondert beschrieben.

Ein dritter Aspekt der Erfindung betrifft einen Kraftwagen mit wenigstens einem elektrischen Antriebsmotor sowie mit einer Steuereinrichtung. Die Steuereinrichtung ist dabei mit dem wenigstens einen Antriebsmotor zum Austauschen von Signalen über wenigstens eine Signalleitung gekoppelt. Des Weiteren ist die Steuereinrichtung dazu eingerichtet, wenigstens eine Ausführungsform wenigstens eines der erfindungsgemäßen Verfahren durchzuführen.

Die Erfindung erfasst auch Weiterbildungen des erfindungsgemäßen Kraftwagens, bei welchen der erfindungsgemäße Kraftwagen um Merkmale erweitert ist, die Merkmalen entsprechen, wie sie bereits in Zusammenhang mit den Ausführungsformen der beiden erfindungsgemäßen Verfahren beschrieben wurden. Aus diesem Grund sind diese Weiterbildungen des erfindungsgemäßen Kraftwagens hier nicht noch einmal gesondert beschrieben.

Die Erfindung wird im Folgenden anhand von Ausführungsbeispielen näher erläutert. Dazu zeigt:
- FIG 1: eine schematische Darstellung eines Kraftwagens gemäß einer Ausführungsform des erfindungsgemäßen Kraftwagens,
- FIG 2 bis 7: einen Vergleich von Kurvenfahrten des Kraftwagens von FIG 1, wie sie sich jeweils einmal mit einer Steuerung gemäß einer Ausführungsform des erfindungsgemäßen Verfahrens und einmal ohne eine solche Steuerung ergeben.

Die Ausführungsbeispiele stellen bevorzugte Ausführungsformen der Erfindung dar.

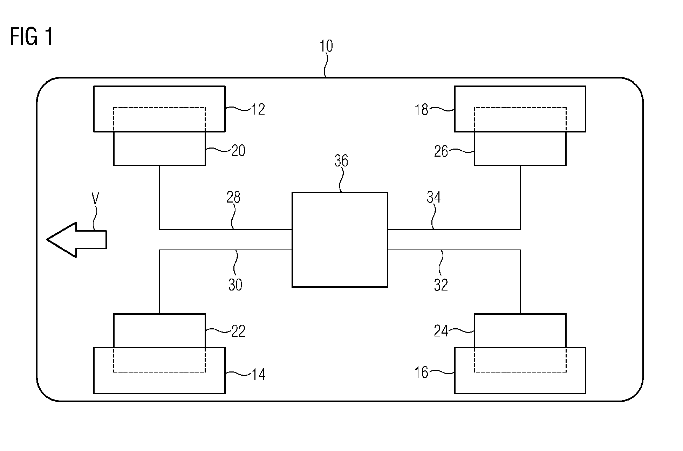

In FIG 1 ist ein Kraftwagen 10 in einer Draufsicht gezeigt. Bei dem Kraftwagen 10 kann es sich beispielsweise um einen Personenkraftwagen oder einen Lastkraftwagen handeln. Vier Räder 12, 14, 16, 18 des Kraftwagens 10 werden durch elektrische Antriebsmotoren 20, 22, 24, 26 angetrieben. In dem in FIG 1 gezeigten Beispiel wird dabei jedes Rad 12 bis 18 von einem gesonderten Antriebsmotor 20, 22, 24, 26 mit einem Drehmoment beaufschlagt. Die Antriebsmotoren 20 bis 26 können jeweils beispielsweise eine elektrische Maschine, wie beispielsweise eine Synchronmaschine oder eine Asynchronmaschine, aufweisen. Dabei können die Antriebsmotoren 20 bis 26 jeweils als Radnabenantrieb, ausgelegt sein oder über eine Welle oder ein Differenzial mit dem jeweiligen Rad 12 bis 18 gekoppelt sein. Anstelle der in FIG 1 gezeigten Einzelradantriebe 20 bis 26 können auch für die Radpaare 12, 14 bzw. 16, 18 Einzelachsantriebe vorgesehen sein. Auch ein einzelner zentraler Elektromotor, welcher über einen Antriebsstrang mit allen Rädern 12 bis 18 gekoppelt ist, kann vorgesehen sein.

Eine Front des Kraftwagens 10, das heißt dessen Bug, ist in FIG 1 durch einen Fahrtrichtungspfeil gekennzeichnet, welcher kenntlich macht, dass der Kraftwagens mit einer Fahrgeschwindigkeit v vorwärts rollt.

Die Antriebsmotoren 20 bis 26 sind über Mess― und Steuerleitungen oder kurz Leitungen 28, 30, 32, 34 mit einer Steuereinheit 36 des Kraftwagens 10 gekoppelt. Bei der Steuereinheit 36 kann es sich beispielsweise um ein Steuergerät handeln, in welchem ein Steuerprogramm durch einen Signalprozessor oder einen Mikrokontroller durchgeführt wird. Bei den Leitungen 28 bis 34 kann es sich um Leitungen eines Kommunikationsbusses des Kraftwagens 10, beispielsweise eines CAN oder eines Flex-Ray-Busses handeln. Die Leitungen 28 bis 34 können aber auch als dedizierte Leitungen bereitgestellt sein, welche ausschließlich zum Austauschen von Signalen zwischen den Antriebsmotoren 20 bis 26 und der Steuereinheit 36 in dem Kraftwagen 10 bereitgestellt sind.

Die Steuereinheit 36 kann über weitere (nicht dargestellte) Signalleitungen mit (nicht dargestellten) Sensoren des Kraftwagens 10 sowie mit einem Navigationsgerät, einem GPS-Empfänger und/oder einem Router für eine Internetverbindung verbunden sein. Anstelle einer einzelnen Steuereinheit wie sie im Beispiel von FIG 1 gezeigt ist, kann auch vorgesehen sein, mehrere Steuereinheiten des Kraftwagens 10 miteinander zu vernetzen und hierdurch die im Folgenden im Zusammenhang mit der Steuereinheit 36 beschriebenen Funktionalitäten bereitzustellen.

Über die Leitungen 28 bis 34 empfängt die Steuereinheit 36 Daten von Ansteuermodulen der Antriebsmotoren 20 bis 26. Des Weiteren sendet die Steuereinheit 36 Ansteuersignale über die Leitungen 28 bis 34 an die einzelnen Steuermodule. Die Ansteuersignale werden durch die Steuereinheit 36 in Abhängigkeit von den Signalen der Ansteuermodule und in Abhängigkeit von den Signalen der übrigen Komponenten, mit welchen die Steuereinheit 36 verbunden ist, gebildet. Die Steuereinheit 36 wertet die empfangenen Daten dabei dahingehend aus, ob sich der Kraftwagen 10 in einer Fahrsituation befindet, in welcher dessen Fahrstabilität gefährdet ist oder in welcher die Fahrdynamik durch Erzeugen entsprechender Ansteuersignale für die Ansteuermodule der Antriebsmotoren 20 bis 26 verbessert werden kann.

Wird beispielsweise an einem der Räder 12 bis 18 Aquaplaning erkannt, so wird die Fahrgeschwindigkeit v des Kraftwagens reduziert. Dies ist möglich, da sich zu dem Zeitpunkt des Aquaplanings eines Reifens die übrigen drei Räder mit großer Wahrscheinlichkeit noch in Kontakt zur Fahrbahn befinden. Welches der Räder 12 bis 18 noch Kontakt zur Fahrbahn hat, wird durch die Steuereinheit ebenfalls anhand der empfangenen Signale erkannt.

Ein weiteres Beispiel für die Einwirkung der Steuereinheit 36 ist die dynamische Leistungsverteilung und Überwachung der Antriebsmotoren 20 bis 26, um die Fahreigenschaften des Kraftwagens 10 in unterschiedlichen Fahrsituationen anzupassen. Die Leistungsverteilung kann dabei von der Steuereinheit auch abhängig von Feder- und/oder Dämpfereinstellungen des Kraftwagens 10 abhängig gemacht sein. So kann die Fahrdynamik des Kraftwagens 10 z. B. in einer Kurvenfahrt durch die Leistungsverteilung und gegebenenfalls geschwindigkeitsabhängig und/oder radiusabhängig beeinflusst werden. Bei einer asymmetrischen Gewichtsverteilung, wie sie sich durch eine Falschbeladung des Kraftwagens 10 ergeben kann, kann durch die dynamische Leistungsverteilung auf die Räder 12 bis 18 ebenfalls die Fahrstabilität des Kraftwagens 10 verbessert werden. Hierbei kann vorgesehen sein, dass die Steuereinheit 36 Signale von Gewichtssensoren an den Achsen und/oder Einzelrädern 12 bis 18 empfängt und zusätzlich auswertet.

Von den Ansteuermodulen der Antriebsmotoren 20 bis 26 empfängt die Steuereinheit 36 bevorzugt ein Signal zu einer Stromstärke eines Motorstromes bzw. eines davon abhängigen Werts. Durch das direkte oder indirekte Überwachen der Motorströme der Antriebsmotoren 20 bis 26 kann durch die Steuereinheit 36 auch eine Energierückspeisung (rekuperativer Betrieb) derart geregelt werden, dass ein Schlupf der Reifen der Räder 12 bis 18 auf der Straße auch während dieser Energierückspeisung eingestellt wird. Dies optimiert die Energierückgewinnung beim Bremsen, ohne die Stabilität des Fahrzeugs nachteilig durch Haftungsverlust zu beeinflussen. Die Steuereinheit 36 kann dazu auch Daten betreffend zum Beispiel den Straßenbelag oder eine aktuelle Witterung in der Umgebung des Kraftwagens 10 mit in die Kalkulation einbeziehen. Die Daten betreffend den Straßenbelag können beispielsweise mittels einer Positionsbestimmung über einen GPS-Empfänger und einer anschließenden Auswertung einer Navigationsdatenbank ermittelt werden. Anhand der Daten über die Witterung (z. B. Regen, Feuchtigkeit oder Temperatur) kann darauf geschlossen werden, ob und in welchem Maße eine Bremskraft oder eine Seitenführungskraft auf dem Untergrund, über welchen der Kraftwagen 10 rollt, übertragen werden kann.

Durch die Steuereinrichtung 36 kann über den Motorstrom beispielsweise auch erkannt werden, ob eines der Räder 12 bis 18 zum Beispiel auf einem unbefestigten Seitenstreifen gelangt ist. Auch hierzu können Navigationsdaten mit herangezogen werden. Wird ein solches Ausscheren des Kraftwagens 10 erkannt, können ebenfalls Maßnahmen zur Sicherung der Fahrstabilität durch die Steuereinheit 36 automatisch eingeleitet werden.

Ein weiteres Beispiel, wie mittels einer Motorstromüberwachung durch die Steuereinheit 36 die Fahrstabilität verbessert werden kann, ist das Erkennen einer unterschiedlichen Leistungsaufnahme der Antriebsmotoren 20 bis 26. Hieraus kann ebenfalls auf ein Durchdrehen eines der Räder 12 bis 18 rückgeschlossen werden. Es ist sogar ermittelbar, ob das Fahrzeug ausbricht, das heißt insbesondere ob das Heck des Kraftwagens 10 quer zur Richtung der Fahrgeschwindigkeit v gleitet. Diese Informationen können durch die Steuereinrichtung 36 unmittelbar zum Erzeugen der Ansteuersignale für die Antriebsmotoren 20 bis 26 genutzt werden oder aber an ein ESP weitergeleitet werden.

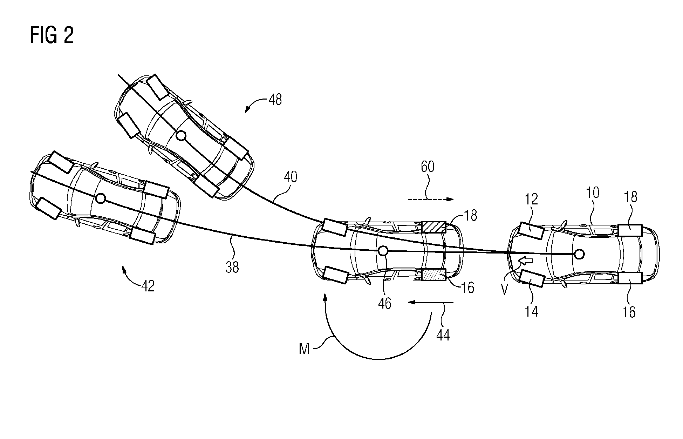

Im Folgenden ist anhand von FIG 2 bis FIG 7 beschrieben, wie durch die Steuereinheit 36 ein Ausbrechen des Kraftwagens 10 verhindert wird, indem die Räder 12 bis 18 während einer Kurvenfahrt nicht nur abgebremst werden, sondern auch beschleunigt werden. Mittels der getrennt ansteuerbaren Antriebsmotoren 20 bis 26 kann bei Verlust der Fahrstabilität eines der Räder 12 bis 18 abgebremst und gleichzeitig ein weiteres beschleunigt werden. So lässt sich die Fahrstabilität schneller als bei einem herkömmlichen ESP wieder herzustellen. In FIG 2 bis FIG 7 sind dabei jeweils ein tatsächlicher Verlauf einer Kurvenfahrt und ein möglicher (unerwünschter) Verlauf dieser Kurvenfahrt des Kraftwagens 10 skizziert.

In FIG 2 ist gezeigt, wie der Kraftwagen 10 mit der Fahrgeschwindigkeit v fährt und dabei von einem Fahrer in eine Rechtskurve gelenkt wird. Der Kraftwagen 10 untersteuert dabei. Ursache dafür kann beispielsweise eine sehr große Beladung des Kraftwagens sein. Aufgrund des Untersteuerns würde sich eine Fahrtrajektorie 38 ergeben, deren Radius geringer als eine gewünschte Fahrtrajektorie 40 ist. Die Fahrroute entlang der Fahrtrajektorie 38 bedeutet eine unerwünschte Fahrsituation 42. Durch die Steuereinheit 36 wird bereits wenige Millisekunden nach dem Beginn des Lenkmanövers diese unerwünschte Fahrsituation 42 erkannt. Als Reaktion darauf erzeugt die Steuereinheit 36 ein Ansteuersignal für den Antriebsmotor 24, der daraufhin ein größeres Antriebsmoment auf das Rad 16 ausübt. Die daraufhin von dem Rad 16 auf die Fahrbahn ausgeübte vergrößerte Antriebskraft 44 erzeugt ein Ausgleichsmoment M, welches den Kraftwagen 10 um dessen Hochachse 46 gieren lässt. Dies wirkt dem unerwünschten, untersteuernden Fahrverhalten des Kraftwagens 10 entgegen. Der Kraftwagen 10 bewegt sich daher auf der gewünschten Trajektorie 40, wodurch sich eine gewünschte Fahrsituation 48 ergibt. Insgesamt wird somit durch das Erkennen der unerwünschten Fahrsituation 42 und das Erzeugen der Antriebskraft 44 durch die Steuereinheit 36 ein ESP bereitgestellt, das mittels der Antriebsmotoren 20 bis 26 des Kraftwagens 10 realisiert ist. In FIG 2 ist zum Vergleich noch dargestellt, wie ein herkömmliches ESP auf die unerwünschte Fahrsituation 42 reagieren würde. Da ein herkömmliches ESP zum Verändern der Fahrsituation 42 lediglich die hydraulischen Bremsen eines Kraftwagens nutzen kann, würde in dem in FIG 2 veranschaulichten Fall das Rad 18 abgebremst werden müssen.

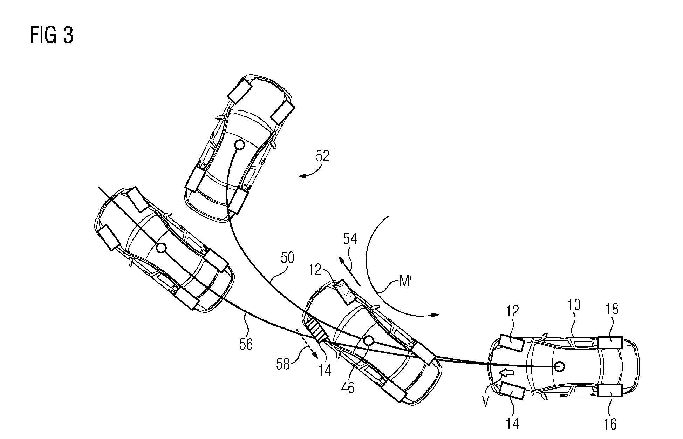

In FIG 3 ist gezeigt, wie durch die Steuereinheit 36 ein Übersteuern des Kraftwagens 10 vermieden wird. Die Steuereinheit 36 erkennt hierbei, dass sich der Kraftwagen 10 während einer Kurvenfahrt entlang einer unerwünschten Trajektorie 50 bewegt. Dieser unerwünschten Fahrsituation 52 wird bereits wenige Millisekunden nach deren Erkennen entgegengewirkt, indem bei der hier gezeigten Kurvenfahrt nach rechts das rechte vordere Rad 12 durch dessen Antriebsmotor 20 mit einem vergrößerten Antriebsmoment beaufschlagt wird, so dass sich eine zusätzliche Antriebskraft 54 ergibt, durch welche ein Ausgleichsmoment M' auf den Kraftwagen 10 wirkt. Dieser wird hierdurch wieder während der Fahrt um seine Hochachse 46 gedreht und so auf eine gewünschte Fahrtrajektorie 56 gebracht. In FIG 3 ist ebenfalls wieder dargestellt, wie bei einem herkömmlichen ESP mittels einer hydraulischen Bremse das linke vordere Rad 14 abgebremst werden müsste, um einen ähnlichen Effekt durch Erzeugen einer Bremskraft 58 zu erzielen.

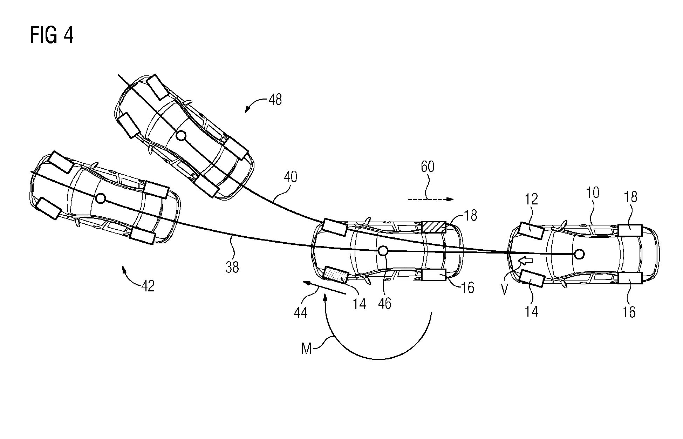

In FIG 4 ist eine ähnliche Situation wie in FIG 2 gezeigt. In der in FIG 4 gezeigten Situation erzeugt die Steuereinrichtung 36 bei der Rechtskurvenfahrt für das benötigten Ausgleichsmoments M die Antriebskraft 44 mittels des linken, vorderen Rades 14 anstelle des linken hinteren Rads 16, wie es in der in FIG 2 gezeigten Situation der Fall ist. Die Steuereinheit 36 kann den Kraftwagen 10 mit beiden Möglichkeiten auf die gewünschte Trajektorie 40 bringen. Auch das Aufteilen der Antriebskraft 44 auf beide Räder 14, 16 ist möglich. Wie die Antriebskraft 44 erzeugt wird, kann bei der Steuereinrichtung 36 dabei beispielsweise davon abhängig gemacht werden, ob bei einem der Räder 14, 16 die Gefahr besteht, dass es durchdreht, wenn es mit einem zu großen Antriebsmoment beaufschlagt wird. Ein herkömmliches ESP ist stets gezwungen, bei der in FIG 4 gezeigten Situation stets das rechte hintere Rad 18 abzubremsen, um eine Bremskraft 60 mit derselben Wirkung wie die Antriebskraft 44 zu erzeugen. Durch die Möglichkeit, die Antriebskraft 44 auf die beiden in der Kurvenfahrt äußeren Räder 14, 16 aufzuteilen, besteht somit die Möglichkeit, auch bei rutschiger Fahrbahn die Fahrstabilität zu gewährleisten.

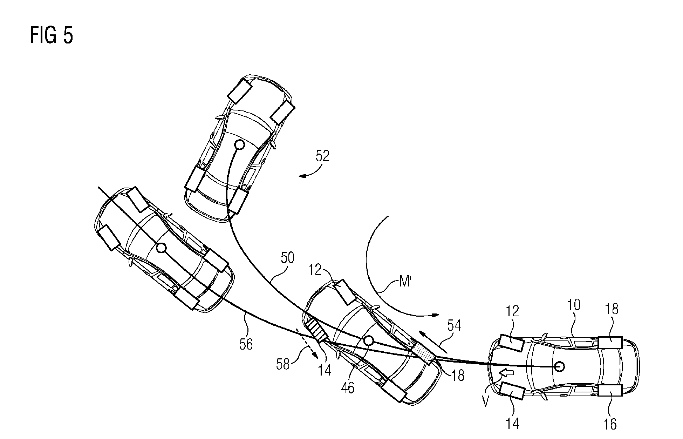

In FIG 5 ist eine ähnliche Fahrsituation wie in FIG 3 gezeigt. Die Steuereinheit 36 erzeugt in der in FIG 5 gezeigten Situation die zum Erzeugen des Ausgleichsmoments M' benötigte Antriebskraft 54 durch Vergrößern des Antriebsmoments, welches auf das in der gezeigten Rechtskurvenfahrt rechte hintere Rad 18 wirkt. Die Steuereinheit 36 kann also auch bei einem Übersteuern des Kraftwagens 10 die zusätzliche Antriebskraft 54 in einer Rechtskurvenfahrt mit dem rechten vorderen Rad 12 oder dem rechten hinteren Rad 18 erzeugen oder die Antriebskraft 54 auch auf diese beiden Räder aufteilen. In FIG 5 ist gezeigt wie ein herkömmliches ESP dazu gezwungen ist, stets das linke vordere Rad 14 zum Erzeugen der Bremskraft 58 abzubremsen.

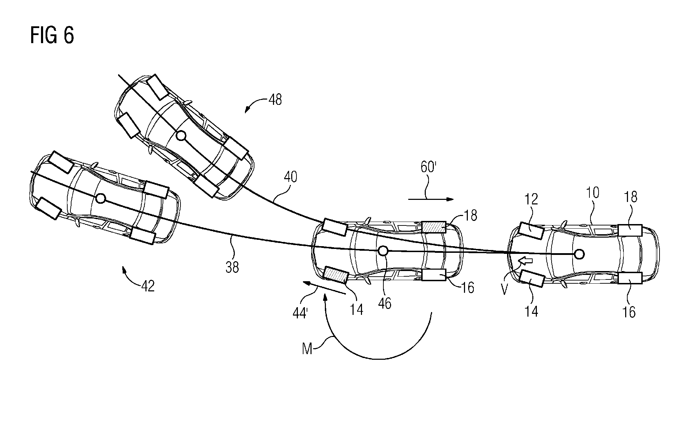

In FIG 6 ist gezeigt, wie durch die Steuereinrichtung 36 das Ausgleichsmoment M nicht nur durch Erzeugen einer Antriebskraft 44' mittels des linken vorderen Rads 14 sondern auch durch zusätzliches Erzeugen einer Bremskraft 60' mittels des rechten hinteren Rads 18 erzeugen kann. Das auf das Rad 18 wirkende Bremsmoment kann dabei durch die Steuereinheit 36 durch Ansteuern einer hydraulischen Bremse oder aber auch durch Betreiben des Antriebsmotors 26 im Generatorbetrieb oder im Bremsbetrieb erzeugt werden. Die Antriebskraft 44' kann natürlich auch mittels des linken hinteren Rades 16 erzeugt oder auf die Räder 14 und 16 aufgeteilt werden.

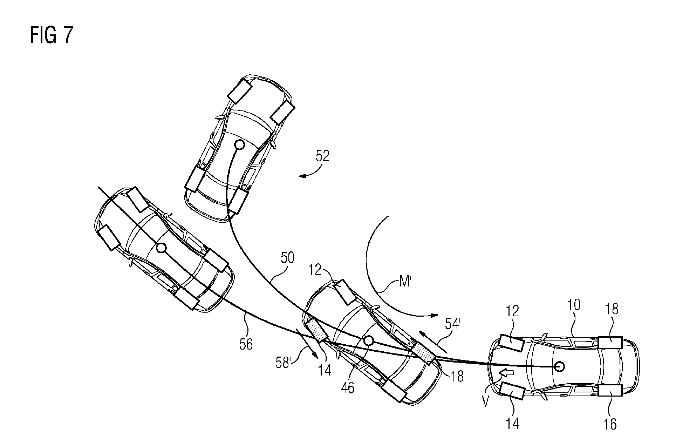

In FIG 7 ist gezeigt, wie durch die Steuereinrichtung 36 das Übersteuern des Kraftwagens 10 ebenfalls durch Kombinieren einer Antriebskraft 54' und einer Bremskraft 58' verhindert wird. Durch die kombinierten Kräfte 54', 58' kann wieder das benötigte Ausgleichsmoment M' erzeugt werden. Die Antriebskraft 54' kann dabei wieder, wie im Zusammenhang mit FIG 5 erläutert, durch das rechte hintere Rad 18, das rechte vordere Rad 12 oder durch beide gemeinsam erzeugt werden.

Das Steuergerät 36 greift in die jeweiligen beschriebenen Fahrsituationen automatisch ein. Ein Fahrer muss dazu nicht in besonderer Weise reagieren. Um den Fahrer darauf aufmerksam zu machen, dass die Fahrstabilität des Kraftwagens 10 durch einen automatischen Eingriff wiederhergestellt wird, kann durch die Steuereinheit 36 ein starkes Abbremsen mit der Motorbremse der Antriebsmotoren 20 bis 26 angezeigt werden. Dies kann beispielsweise durch ein akustisches Signal geschehen.

Bei dem Kraftwagen 10 kann vorgesehen sein, dass bei einem Ausfall des Stromrichters ein Bremswiderstand mit Wicklungen eines entsprechenden Antriebsmotors, welcher durch den Stromrichter gesteuert werden soll, elektrisch gekoppelt wird. Hierdurch erzeugt dann dieser Antriebsmotor ein Bremsmoment an dem von ihm angetriebenen Rad.

Für den Fall, dass der Kraftwagen 10 abgeschleppt wird, weil seine Traktionsbatterie zum Betreiben der Antriebsmotoren 20 bis 26 leer ist, können die Antriebsmotoren 20 bis 26 während des Abschleppens im Generatorbetrieb betrieben werden. Hierdurch kann dann die leere Traktionsbatterie während des Abschleppens wieder aufgeladen werden.

Insgesamt ist durch die Beispiele gezeigt, wie bei einem Kraftwagen mit elektrischen Einzelradantrieben ein ESP bereitgestellt werden kann.

Bei dem Kraftwagen kann auch vorgesehen sein, das gesamte Bremssystem zu vereinfachen. Hierbei ist vorgesehen, eine mechanische (hydraulische) Bremse nur noch für einen Notfall vorzusehen, falls die Elektrik des Kraftwagens ausfällt. So entfällt dann eine komplizierte Bremssteuerung, wie sie für ein ABS auf Basis der hydraulischen Bremse benötigt würde. Dies reduziert die Herstellungskosten des Kraftwagens. Bremsen lässt sich der Kraftwagen im Normalfall mit den Antriebsmotoren 20 bis 26. Durch die Antriebssteuerung, das heißt die Ansteuermodule der Antriebsmotoren 20 bis 26 oder durch die Steuereinheit 36, kann hierbei ebenfalls ein ABS nachgebildet werden.

## Patentansprüche

1. Verfahren zum Betreiben einer Steuereinrichtung (36) eines Kraftwagens (10), welcher wenigstens einen elektrischen Antriebsmotor (20 bis 26) aufweist, umfassend die Schritte:
- Erfassen wenigstens eines Werts für wenigstens eine Betriebsgröße des wenigstens einen Antriebsmotors (20 bis 26);
- in Abhängigkeit von dem wenigstens einen erfassten Wert, Ansteuern wenigstens eines Betriebsmittels (20 bis 26) des Kraftwagens (10) und hierdurch verändern einer Fahrsituation (42,52) des Kraftwagens (10).

2. Verfahren nach Anspruch 1, **dadurch gekennzeichnet, dass** wenigstens eine der folgenden Betriebsgrößen erfasst wird: ein Motorstrom; eine Leistungsaufnahme eines Antriebsmotors (20 bis 26); eine Drehzahl wenigstens eines Rotors; eine Pulsfrequenz wenigstens eines Wechselrichters; eine q-Komponente eines Statorstromes; eine d-Komponente des Statorstromes; eine Schlupffrequenz zwischen einem Stator- und einem Rotordrehfeld; bei einer Reglereinrichtung, insbesondere einer Vektorregelung, eine Stellgröße, eine Regelgröße, eine Regelabweichung der Regeleinrichtung.

3. Verfahren nach Anspruch 1 oder 2, **dadurch gekennzeichnet, dass** in Abhängigkeit von dem wenigstens einen erfassten Wert eine Beschaffenheit eines unter wenigstens einem Rad (12 bis 18) des Kraftwagens (10) befindlichen Fahrbahnabschnitts und/oder ein Grad einer Haftung des Rads (12 bis 18) auf dem Fahrbahnabschnitt und/oder eine Giergeschwindigkeit des Kraftwagens (10) und/oder ein Wanken des Kraftwagens (10) und/oder ein Nicken des Kraftwagens (10) ermittelt wird.

4. Verfahren nach einem der vorhergehenden Ansprüche, **dadurch gekennzeichnet, dass** in Abhängigkeit von dem wenigstens einen erfassten Wert aus einer Mehrzahl von vorgegebenen möglichen Fahrsituationen (42,52) eine davon als aktuelle Fahrsituation ausgewählt wird, die durch das Ansteuern des wenigstens einen Betriebsmittels (20 bis 26) zu ändern ist, wobei die möglichen Fahrsituationen (42, 52) insbesondere wenigstens eine der folgenden möglichen Fahrsituationen umfassen: wenigstens ein Reifen ist auf einen unbefestigten Seitenstreifen einer Straße gelangt; ein Bug- oder Heckteil des Kraftwagens bricht aus; wenigstens ein Rad (12 bis 18) hat keinen Kraftschluss mit der Fahrbahnoberfläche, insbesondere aufgrund von Aquaplaning.

5. Verfahren nach einem der vorhergehenden Ansprüche, **dadurch gekennzeichnet , dass** wenigstens eines aus den folgenden Betriebsmitteln angesteuert wird: ein ESP; ein ABS; ein Signalgeber, durch welchen dann an einen Fahrer des Kraftwagens ein akustisches und/oder optisches und/oder haptisches Warnsignal abgegeben wird; ein Lenkassistent, durch welchen dann fahrerunabhängig ein Lenkmanöver eingeleitet wird; ein Bremssystem, durch welches dann fahrerunabhängig eine Notbremsung eingeleitet wird; eine Regeleinrichtung eines Antriebsmotors (20 bis 26).

6. Verfahren nach einem der vorhergehenden Ansprüche, **dadurch gekennzeichnet , dass** während eines Abbremsens des Kraftwagens (10) eine elektrische Maschine wenigstens eines Antriebsmotors (20 bis 26) als Generator betrieben wird und hierdurch wenigstens ein Rad (12 bis 18) des Kraftwagens (10) mit einem Bremsmoment beaufschlagt wird und hierbei als der wenigstens eine erfasste Wert ein Schlupf des Rades (12 bis 18) bezüglich einer Fahrbahn ermittelt und zum Einregeln des Schlupfes auf einen Soll-Schlupfwert das Bremsmoment in Abhängigkeit von dem ermittelten Schlupf eingestellt wird.

7. Verfahren zum Betreiben einer Steuereinrichtung (36) eines Kraftwagens (10), welcher eine Mehrzahl von elektrischen Antriebsmotoren (20 bis 26) aufweist, umfassend die Schritte:
- Bereitstellen eines Einzelradtriebs und/oder eines Einzelachsantriebs, wobei hierzu wenigstens ein erstes Rad (12 bis 18) des Kraftwagens (10) mit einem ersten Antriebsmotor (20 bis 26) und wenigsten ein zweites Rad (12 bis 18) des Kraftwagens (10) mit einem zweiten Antriebsmotor (20 bis 26) jeweils mit einem Drehmoment beaufschlagt werden,
- Erfassen eines Signals wenigstens eines Sensors des Kraftwagens (10),
- in Abhängigkeit von dem erfassten Signal, Beaufschlagen des wenigstens einen ersten Rads (12 bis 18) mit einem ersten Drehmoment und des wenigstens einen zweiten Rads (12 bis 18) mit einem davon verschiedenen zweiten Drehmoment.

8. Verfahren nach Anspruch 7, **dadurch gekennzeichnet, dass** das wenigstens eine erste Rad (12 bis 18) mit einem Antriebsmoment und gleichzeitig das wenigstens eine zweite Rad (12 bis 18) mit einem Bremsmoment beaufschlagt wird.

9. Verfahren nach einem der Ansprüche 7 oder 8, **dadurch gekennzeichnet , dass** auf der Grundlage des Signals eine Kurvenfahrt (38, 50) erkannt wird und ein Fahrverhalten des Kraftwagens (10) durch Einstellen einer Giergeschwindigkeit gesteuert wird und hierzu das wenigstens eine erste Rad (12 bis 18) mit einem anderen, insbesondere größeren, Antriebsmoment beaufschlagt wird als die übrigen Räder (12 bis 18) und/oder das wenigstens eine zweite Rad (12 bis 18) mit einem anderen, insbesondere größeren, Bremsmoment beaufschlagt wird als die übrigen Räder (12 bis 18).

10. Verfahren nach einem der Ansprüche 7 bis 9, **dadurch gekennzeichnet, dass** bei einer Kurvenfahrt (38,50) wenigstens ein Wert für eine Fahrgeschwindigkeit (v) und/oder für einen Radius einer Fahrtrajektorie (38,50) erfasst wird und zum Einstellen eines Fahrverhaltens des Kraftwagens (10) eine insgesamt zu erzeugende Antriebs- oder Bremsleistung in Abhängigkeit von dem Signal des wenigstens einen Sensors auf die Räder (12 bis 18) aufgeteilt wird.

11. Verfahren nach einem der Ansprüche 7 bis 10, **dadurch gekennzeichnet , dass** auf der Grundlage des Signals eine Falschbeladung des Kraftwagens (10) erkannt und hierzu eine Asymmetrie einer Gewichtsverteilung in dem Kraftwagen (10) ermittelt wird und zum Einstellen eines Fahrverhaltens des Kraftwagens (10) eine insgesamt zu erzeugende Antriebs- oder Bremsleistung auf die Räder (12 bis 18) des Kraftwagens (10) in Abhängigkeit von der ermittelten Asymmetrie aufgeteilt wird.

12. Verfahren nach einem der Ansprüche 7 bis 11, **dadurch gekennzeichnet, dass** auf der Grundlage des Signals eine Abschleppfahrt erkannt wird, bei welcher der Kraftwagen (10) abgeschleppt wird, und wenigstens eine elektrische Maschine wenigstens eines der Antriebsmotoren (20 bis 26) als Generator betrieben wird und hierdurch ein elektrischer Energiespeicher des Kraftwagens (10) während der Abschleppfahrt mit elektrischer Energie aufgeladen wird.

13. Verfahren nach einem der Ansprüche 7 bis 12, **dadurch gekennzeichnet , dass** auf der Grundlage des Signals ein Ausfall eines Stromrichters eines der Antriebsmotoren (20 bis 26) erkannt wird und dieser Antriebsmotor (20 bis 26) mittels eines Bremswiderstands abgebremst wird.

14. Verfahren nach einem der Ansprüche 7 bis 13, **dadurch gekennzeichnet, dass** das erste und das zweite Drehmoment in Abhängigkeit von wenigstens einer der folgenden Zustandsgrößen des Kraftwagens (10) eingestellt wird: von Federeinstellungen des Kraftwagens (10), von Dämpfereinstellungen des Kraftwagens (10), von einem gemessenen Luftdruck wenigstens eines Reifens (12 bis 18) des Kraftwagens (10), von einer Gewichtsverteilung einer Beladung in dem Kraftwagen (10), von Sitzpositionen von in dem Kraftwagen (10) befindlichen Personen, von einer durch Gewichtssensoren des Kraftwagens (10) angezeigten Gewichtskraft, welche auf eine Achse und/oder ein Einzelrad (12 bis 18) wirkt.

15. Verfahren nach einem der vorhergehenden Ansprüche, **dadurch gekennzeichnet, dass** zusätzlich in Abhängigkeit von einem mittels wenigstens einem der Antriebsmotoren (20 bis 26) erzeugten Drehmoment ein akustisches und/oder optisches und/oder haptisches Warnsignal an einen Fahrer des Kraftwagens (10) abgegeben wird, insbesondere falls mittels wenigstens eines der Antriebsmotoren (20 bis 26) ein Bremsmoment erzeugt wird, dessen Betrag größer als ein vorbestimmter Schwellenwert ist.

16. Verfahren nach einem der vorhergehenden Ansprüche, **dadurch gekennzeichnet, dass** zum Ansteuern wenigstens eines elektrischen Antriebsmotors (20 bis 26) Daten zu einem Fahrbahnzustand und/oder zu einer Beschaffenheit eines Fahrbahnabschnitts unter wenigstens einem Rad (12 bis 18) und/oder zu einer Beschaffenheit eines Fahrbahnbelags einer vor dem Kraftwagen (10) befindlichen Fahrbahn erfasst und ausgewertet werden und zum Bereitstellen der Daten insbesondere ein Sensorsignal eines Regensensors erfasst wird und/oder Wetterdaten, insbesondere eine Umgebungstemperatur oder Regen betreffend, über eine Empfangseinrichtung empfangen werden und/oder eine Position des Kraftwagens (10) über eine Empfangseinrichtung des Kraftwagens ermittelt und die Daten dann aus einer Navigationsdatenbank ausgelesen werden.

17. Kraftwagen (10) mit wenigstens einem elektrischen Antriebsmotor (20 bis 26) sowie mit einer Steuereinrichtung (36), welche mit dem wenigstens einen Antriebsmotor (20 bis 36) zum Austauschen von Signalen über wenigstens eine Signalleitung (28 bis 34) gekoppelt ist und welche dazu eingerichtet ist, wenigstens ein Verfahren nach einem der vorhergehenden Ansprüche durchzuführen.
